# FASCICULE DE BREVET EUROPEEN

(11) **EP 2 774 355 B1**
(45) Date de publication et mention de la délivrance du brevet: **07.08.2019**
(21) Numéro de dépôt: 12775670.8
(22) Date de dépôt: 18.10.2012
(51) Int. Cl.: H04N 5/374, H04N 5/372, H04N 5/3745

(54) **CAPTEUR D'IMAGE A DEFILEMENT ET SOMMATION NUMERIQUE MULTIPHASE**
BILDAUFNAHMEGERÄT MIT TIME DELAY INTEGRATION UND MEHRPHASIGER NUMERISCHER ADDITION VON SIGNALEN
TIME DELAY INTEGRATION IMAGING DEVICE WITH NUMERICAL MULTIPHASE BINNING

(30) Priorité: 04.11.2011 FR 1160040
(43) Date de publication de la demande: 10.09.2014
(73) Titulaire: Teledyne e2v Semiconductors SAS, 38120 Saint-Egrève (FR)
(72) Inventeur: MAYER, Frédéric, 38500 Voiron (FR); BUGNET, Henri, 38430 Moirans (FR)
(74) Mandataire: Desvignes, Agnès
(86) Numéro de dépôt international: PCT/EP2012/070658
(87) Numéro de publication internationale: WO 2013/064380

(56) Documents cités:
- FR-A1- 2 906 080
- US-A1- 2008 217 661
- US-A1- 2009 295 971

## Description

L'invention concerne les capteurs d'image linéaire à défilement et intégration de signal (ou capteurs TDI, de l'anglais : "Time Delay Integration Linear Sensors"), dans lesquels une image d'une ligne de points d'une scène observée est reconstituée par addition d'images successives prises par plusieurs lignes photosensibles observant successivement une même ligne de la scène au fur et à mesure que la scène défile devant le capteur perpendiculairement aux lignes.

Ces capteurs sont utilisés par exemple dans des systèmes d'observation de la terre par satellite. Ils comprennent plusieurs lignes parallèles de pixels photosensibles ; le séquencement des circuits de commande des différentes lignes (contrôle de temps d'exposition puis de lecture des charges photogénérées) est synchronisé par rapport au défilement relatif de la scène et du capteur, de manière que toutes les lignes du capteur voient une seule ligne de la scène observée. Les signaux générés sont ensuite additionnés point à point pour chaque point de la ligne observée.

Le rapport signal/bruit théorique est amélioré dans le rapport de la racine carrée du nombre N de lignes du capteur. Ce nombre peut aller de quelques lignes à une centaine selon les applications (contrôle industriel, observation terrestre, radiographie panoramique dentaire ou mammographie).

Dans les capteurs à transfert de charges (capteurs CCD), l'addition des signaux point par point se faisait naturellement et sans bruit de lecture en vidant dans une ligne de pixels les charges générées et accumulées dans la ligne de pixels précédente, en synchronisme avec le déplacement relatif de la scène et du capteur. La dernière ligne de pixels, ayant accumulé N fois les charges engendrées par la ligne de scène observée, pouvait ensuite être transférée vers un registre de sortie et convertie lors d'une phase de lecture, en tension ou courant électrique.

De tels capteurs à transfert de charges existent, soit dans des technologies traditionnelles avec grilles de transfert adjacentes réalisées à

partir d'au moins deux niveaux de silicium polycristallin, le deuxième niveau recouvrant en partie le premier, soit dans des technologies à un seul niveau de grille de silicium polycristallin, plus compatibles avec les technologies actuelles de fabrication de circuits intégrés logiques CMOS.

Des capteurs de charge utilisant des pixels actifs de technologie CMOS présentent cependant des avantages.

Un capteur TDI CMOS est par exemple décrit dans la demande de brevet WO2008034794. Dans ce capteur, il n'y a pas de transfert de charge de ligne à ligne puisque les pixels actifs ne fonctionnent pas par transfert de charge mais fournissent une tension sur un conducteur de colonne. Pour faire l'addition des signaux correspondant à une même ligne d'image vue par les différentes lignes de pixels, on utilise une conversion analogique-numérique pour fournir une représentation numérique de la sortie de chaque pixel et on additionne N valeurs numériques issues de N pixels qui ont successivement vus le même point d'image au cours du défilement. Toutefois, le principe décrit dans cette demande ne permet pas de faire une lecture de signal par double échantillonnage corrélé véritable.

La demande de brevet US2008/217661 propose une autre structure de capteur TDI CMOS basée sur des photodiodes "pinned" et des grilles de transfert entre chaque. Il s'agit ici de reproduire le principe de transfert de charges de pixel à pixel des capteurs CCD, avec la possibilité de facilement définir un sens de défilement de la scène par rapport au capteur, chaque grille entre deux photodiodes permettant de transférer les charges de l'une à l'autre. A la fin d'un cycle TDI, le capteur proposé permet que les charges relatives au même point observé sont transférées dans un noeud de lecture. Mais il est aussi prévu un noeud de lecture associé à chaque photodiode, pour améliorer la fréquence d'images.

Dans ces capteurs TDI CMOS, lorsque l'on vient lire ainsi chaque pixel séparément, on a un problème de dégradation de la fonction de transfert de modulation liée au fait que le défilement relatif de la scène devant le capteur est continu tandis que l'information pixel est traitée de manière discrète. Ainsi, une image de barres noires et blanches au pas des pixels, qui fournirait en sortie du capteur une amplitude de signal crête à crête de valeur unitaire si l'image était statique (en omettant de considérer la fonction de transfert de modulation purement géométrique), ne fournit plus qu'une amplitude crête à crête de 0,64 si l'image défile. Cette valeur de 0,64 est la composante de défilement de la fonction de transfert de modulation (il y a d'autres composantes, liées à d'autres facteurs, qui peuvent affaiblir encore la fonction de transfert de modulation globale).

On pourrait bien sûr réduire la taille des pixels pour compenser la faible fonction de transfert de modulation par une augmentation de la résolution théorique. En divisant le pas des pixels par deux, on multiplie la résolution par deux. Mais cela oblige à multiplier aussi le nombre de convertisseurs analogiques-numériques.

Une autre contrainte de la capture d'image avec des pixels de technologie CMOS est le besoin d'exposer toutes les lignes de pixels pendant le même créneau de temps de durée si possible réglable (mode de fonctionnement appelé "global shutter") et non pas pendant des créneaux successifs de même durée mais décalés dans le temps d'une ligne à la suivante (mode de fonctionnement appelé "rolling shutter").

Enfin, on rappelle que la capture d'image avec des pixels de technologie CMOS à quatre ou cinq transistors engendre un bruit de lecture de type kTC qu'il faut essayer de réduire en effectuant une lecture par double échantillonnage corrélé ; cela veut dire qu'il faut essayer de lire d'abord un niveau de réinitialisation d'un noeud de stockage de charges avant de déverser des charges actives dans ce noeud. Dans les capteurs de technologie CMOS connus, le mode de fonctionnement global shutter est incompatible avec un double échantillonnage corrélé véritable.

L'invention a pour but de proposer une structure de capteur TDI CMOS à pixels actifs qui augmente la valeur de la fonction de transfert de modulation liée au défilement tout en permettant une lecture par double échantillonnage corrélé véritable et un mode de fonctionnement de type "global shutter" avec durée d'intégration de préférence réglable. Pour cela on propose un capteur tel que défini dans les revendications. En résumé, il s'agit d'un capteur dont les pixels, de préférence de forme généralement carrée, comportent au moins deux photodiodes, et éventuellement trois ou même quatre, disposées successivement dans le sens du défilement de la scène à observer devant le capteur, avec des noeuds de stockage de charge entre les photodiodes du pixel et entre les photodiodes de pixels adjacents d'une même colonne de pixels, avec deux grilles de transfert associées à chaque photodiode, entre la photodiode et les deux noeuds qui l'encadrent. Les noeuds de stockage d'un pixel de rang i sont reliés à un conducteur de colonne et il y a autant de circuits d'échantillonnage et de conversion analogique-numérique qu'il y a de pixels dans une colonne. Les grilles de transfert sont commandées de manière à transférer les charges d'une photodiode soit vers un noeud de stockage situé en aval de la photodiode soit vers un noeud situé en amont. Cette commande des grilles se fait selon un cycle périodique de plusieurs phases (autant de phases que de photodiodes dans le pixel). La période du cycle est le temps de défilement relatif entre le capteur et la scène sur une distance égale à la hauteur du pixel, c'est-à-dire sur un pas des pixels en colonne. A chaque phase, il y a un noeud de stockage qui ne reçoit pas de charges des photodiodes ; les autres reçoivent des charges des photodiodes qui lui sont adjacentes ; le noeud qui ne reçoit pas de charges est permuté à chaque nouvelle phase selon une permutation circulaire. Les charges reçues par les autres noeuds de stockage sont converties en numérique et sont additionnées entre elles, avec un décalage temporel, sur les différentes phases d'une période et sur N périodes successives. L'addition se fait en synchronisme avec le défilement, c'est-à-dire qu'on additionne entre elles des charges issues de photodiodes différentes mais qui ont vu la même portion d'image au cours des différentes phases.

Dans le cas d'un capteur fonctionnant avec deux phases, qui est le cas le plus simple, les pixels de forme carrée comportent deux photodiodes, qu'on peut appeler photodiode aval et photodiode amont, un noeud de stockage de charges central situé entre les deux photodiodes, un noeud de stockage de charges aval situé entre la photodiode aval du pixel et la photodiode amont d'un pixel situé immédiatement en aval du pixel considéré, et un noeud de stockage amont situé entre la photodiode amont du pixel considéré et la photodiode aval d'un pixel situé immédiatement en amont. Le noeud aval comme le noeud amont sont donc partagés entre deux pixels adjacents.

Plus précisément, dans le cas d'un fonctionnement en deux phases, on propose selon l'invention un capteur d'image à défilement et sommation de charges synchronisée avec le défilement relatif de la scène devant le capteur, comprenant N lignes de pixels réparties avec un pas D ; chaque pixel de rang i en colonne dans le sens du défilement a de préférence une forme généralement carrée et comprend une première et une deuxième photodiodes disposées successivement dans le sens du défilement et trois noeuds de stockage de charges séparés des photodiodes par des grilles de transfert de charges ; les noeuds de stockage comprennent un noeud central situé entre les deux photodiodes et deux autres noeuds, partagés avec les pixels adjacents, qui sont un noeud aval situé entre la première photodiode du pixel de rang i et la deuxième photodiode du pixel de rang i+1 situé immédiatement en aval du pixel de rang i, et un noeud amont situé entre la deuxième photodiode du pixel de rang i et la première photodiode du pixel de rang i-1 situé immédiatement en amont du pixel de rang i. Le capteur comprend encore :
- un circuit de conversion analogique-numérique associé à chaque pixel ;
- des moyens de commande des grilles de transfert et des circuits de conversion pour transférer les charges d'une photodiode vers l'un ou l'autre des noeuds de stockage qui l'encadrent puis les convertir, selon un cycle périodique de période Tp où Tp est le temps de défilement sur une distance égale à un pas des lignes de pixels, qui est un cycle de deux phases qui sont telles que, pour chaque pixel de rang i :
   - à la fin d'une première phase, les charges des deux photodiodes sont transférées dans le noeud central en vue d'une opération de conversion analogique-numérique ultérieure par le circuit de conversion analogique-numérique de rang i (CONVᵢ) du pixel de rang i ;
   - à la fin d'une deuxième phase, les charges de la première photodiode du pixel de rang i ainsi que les charges de la deuxième photodiode du pixel aval de rang i+1 sont transférées dans le noeud aval, puis les charges présentes dans le noeud aval sont converties dans le convertisseur analogique-numérique de rang i associé au pixel de rang i;
- des moyens pour accumuler dans le convertisseur de rang i les résultats de la ou les conversions effectuées au cours d'un cycle de deux phases avec le résultat précédemment accumulé dans le convertisseur de rang i-1 à la fin du cycle précédent.

Dans un premier mode de réalisation, des moyens de sélection sont prévus pour sélectionner indépendamment l'un de l'autre le noeud central ou le noeud aval afin de lire les charges qui y sont contenues ; on peut en particulier réinitialiser les noeuds indépendamment l'un de l'autre, et lire les charges après réinitialisation ou après transfert de charges indépendamment pour chaque noeud. Dans ce cas, à la fin de la première phase, après transfert des charges dans le noeud central, les charges de ce noeud sont converties dans le circuit de conversion de rang i associé au pixel de rang i.

Dans un autre mode de réalisation, le noeud central et le noeud aval sont électriquement reliés par un conducteur de manière à constituer un noeud électriquement commun ; on ne prévoit pas de moyen pour sélectionner les noeuds indépendamment l'un de l'autre ; dans ce cas, les charges contenues dans le noeud électriquement commun sont converties dans le circuit de conversion de rang i seulement à la fin de la deuxième phase mais pas à la fin de la première phase ; les charges des deux phases, provenant de différentes photodiodes sont additionnées analogiquement dans le noeud commun avant d'être converties en numérique. Des moyens de réinitialisation du noeud commun sont prévus pour réinitialiser le noeud au cours de la première phase, avant transfert de charges dans le noeud central, mais pas au cours de la deuxième phase avant transfert de charges dans le noeud aval.

Dans le cas d'un fonctionnement à trois phases, le pixel, de préférence de forme généralement carrée, comporte trois photodiodes disposées successivement dans le sens du défilement, deux noeuds de stockage centraux entre les photodiodes, et deux autres noeuds partagés avec les pixels adjacents, qui sont respectivement un noeud de stockage aval entre la première photodiode du pixel de rang i et la dernière photodiode du pixel de rang i+1 situé immédiatement en aval, et un noeud de stockage amont entre la dernière photodiode du pixel de rang i et la première photodiode du pixel de rang i-1 situé immédiatement en amont ; il y a des grilles de transfert de charges entre les photodiodes et les noeuds de stockage, aussi bien à l'intérieur du pixel qu'entre les photodiodes de deux pixels adjacents. Les grilles de transfert sont actionnées au cours des trois phases successives de manière que deux des noeuds de stockage reçoivent des charges mais pas le troisième. Celui qui ne reçoit pas de charges tourne par permutation circulaire d'une phase à la suivante, de telle manière que les charges déversées dans un noeud de stockage correspondent chaque fois à une même portion d'image vue par le pixel. Les charges de ces noeuds de stockage sont lues et converties en numérique au cours des trois phases (une conversion respective dans chaque phase pour chacun des noeuds de stockage qui ont reçu des charges, c'est-à-dire ici deux conversions par phase) ; une addition est faite sur les trois phases en faisant en sorte que les résultats additionnés proviennent à chaque fois de deux photodiodes adjacentes qui ne sont pas les mêmes au cours des trois phases mais qui sont celles qui ont vu la même portion d'image pendant le cycle de trois phases. Une addition numérique est par ailleurs faite sur les résultats de conversion de N pixels ayant vu la même portion d'image au cours du défilement du capteur devant l'image.

Un fonctionnement en quatre phases voire même plus est également envisageable mais la complexité augmente et l'amélioration de la fonction de transfert de modulation devient marginale.

Plus généralement, pour P phases : chaque pixel, de préférence de forme généralement carrée, comporte P photodiodes, disposées successivement dans le sens du défilement du capteur devant l'image, avec des noeuds de stockage de charge entre les photodiodes du pixel et entre les photodiodes de pixels adjacents d'une même colonne de pixels, avec deux grilles de transfert associées à chaque photodiode, entre la photodiode et les deux noeuds de stockage qui lui sont adjacents ; les noeuds de stockage peuvent être sélectionnés pour être reliés à un conducteur de colonne et à autant de circuits de conversion analogique-numérique qu'il y a de pixels dans une colonne, et chaque circuit de conversion est apte à faire P-1 conversions simultanées correspondant aux charges de P-1 noeuds de stockage (c'est-à-dire qu'un circuit de conversion associé à un pixel comporte P-1 circuits d'échantillonnage et P-1 convertisseurs travaillant en parallèle) ; les grilles de transfert sont commandées de manière à transférer les charges d'une photodiode soit vers un noeud de stockage situé en aval de la photodiode soit vers un noeud situé en amont, selon un cycle périodique de période Tp correspondant à la durée de défilement sur une distance D ; le cycle comporte P phases de durées égales ; la commande des grilles est telle qu'à chaque phase il y a un noeud de stockage qui ne reçoit pas de charges des photodiodes et le noeud qui ne reçoit pas de charges est permuté à chaque nouvelle phase selon une permutation circulaire ; les charges reçues par les autres noeuds de stockage sont converties en numérique et sont additionnées entre elles sur les différentes phases d'une période en faisant en sorte que les résultats additionnés proviennent à chaque fois de deux photodiodes adjacentes qui ne sont pas les mêmes au cours des P phases mais qui sont celles qui ont vu la même portion d'image pendant le cycle de P phases. Une addition numérique est par ailleurs faite sur les résultats de conversion de N pixels ayant vu la même portion d'image au cours du défilement du capteur devant l'image.

Pour faciliter l'addition numérique au cours des différentes phases et l'addition entre les N pixels qui ont vu la même portion d'image, on prévoit que les circuits de conversion analogique-numérique fonctionnent chacun avec un compteur (ou plus généralement P-1 compteurs s'il y a P phases) dont le contenu est incrémenté proportionnellement à la valeur analogique du signal à convertir ; on prévoit que le contenu du compteur correspondant au pixel de rang i est initialisé, au début d'un cycle périodique de deux (ou trois ou plus) phases mais pas entre deux (ou trois ou plus) phases du même cycle, à une valeur qui est le résultat accumulé par le compteur correspondant du circuit de conversion de rang précédent i-1.

D'autres caractéristiques et avantages de l'invention apparaîtront à la lecture de la description détaillée qui suit et qui est faite en référence aux dessins annexés dans lesquels :
- la figure 1 représente l'architecture générale d'un capteur selon l'invention ;
- la figure 2 représente schématiquement un pixel actif CMOS à 5 transistors ;
- la figure 3 représente schématiquement une colonne de pixels agencés selon l'invention pour un fonctionnement en deux phases ;
- la figure 4 représente une succession de captures d'image du capteur selon l'invention pour un fonctionnement en cycles périodiques de deux phases ;
- la figure 5 représente un schéma électrique de pixels en colonne associés chacun à un circuit de conversion analogique-numérique respectif ;
- la figure 6 représente un chronogramme de fonctionnement du capteur des figures 3 à 5 ;
- la figure 7 représente un schéma électrique dans une variante de réalisation où les deux noeuds de stockage d'un pixel sont reliés électriquement ;
- la figure 8 représente un chronogramme de fonctionnement du capteur de la figure 7 ;
- la figure 9 représente une structure de pixels pour un fonctionnement en trois phases ;
- la figure 10 représente un schéma de capture d'image dans un cycle de trois phases ;
- la figure 11 représente un chronogramme du fonctionnement de la structure de la figure 9.

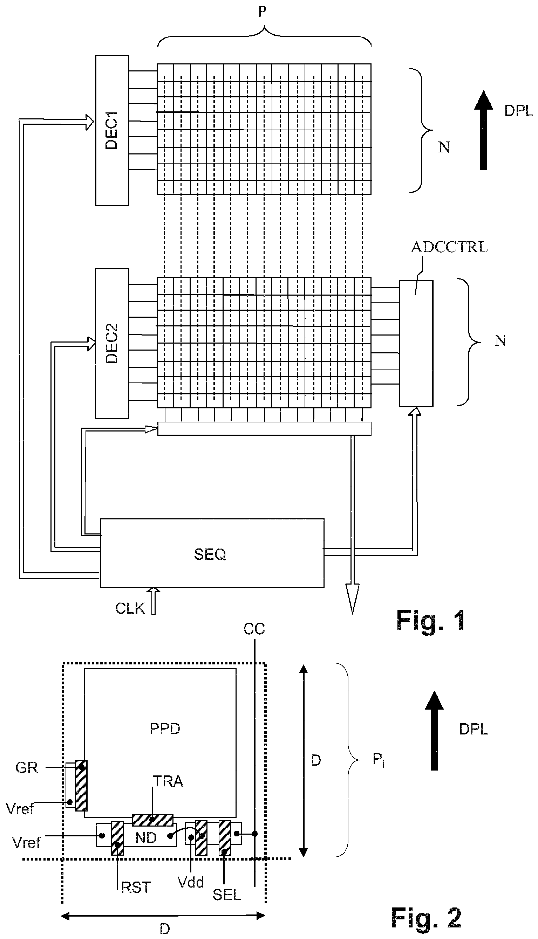

Sur la figure 1, on a représenté une structure générale de capteur d'image à défilement et sommation de charges. Le capteur comporte N lignes de pixels ; l'image à observer se déplace par rapport au capteur dans une direction représentée par une flèche DPL, perpendiculaire aux lignes c'est-à-dire parallèle aux colonnes de pixels. La vitesse de défilement est synchronisée avec la séquence d'intégration et lecture des charges générées par la lumière, de sorte que si le pas des pixels en colonne est D et la vitesse de défilement est V, on effectue une intégration et une lecture de charges cycliquement avec une période temporelle Tp=D/V. Les charges lues par une ligne de pixels pendant une période sont additionnées aux charges lues par la ligne de pixel précédente (par rapport au sens de la flèche DPL) pendant la période précédente. Les charges sont additionnées sur N périodes correspondant à l'observation d'une même portion d'image successivement par les N lignes de pixels.

Les pixels sont des pixels actifs réalisés en technologie CMOS. Ils effectuent une conversion charge-tension à l'intérieur du pixel : chaque pixel recueille des charges générées par la lumière qui l'éclaire et transmet sur un conducteur de sortie un potentiel correspondant aux charges recueillies au cours d'une période. Le conducteur de sortie est un conducteur de colonne commun à tous les pixels d'une même colonne. Les pixels sont adressés ligne par ligne pour qu'un pixel d'une ligne reporte un potentiel sur son conducteur de colonne, après quoi le conducteur de colonne reçoit le potentiel correspondant au pixel de la ligne suivante. Un décodeur de ligne DEC1 réalise cet adressage successif des lignes.

Les potentiels présents sur les conducteurs de colonne sont échantillonnés, de préférence par double-échantillonnage, et sont numérisés par des convertisseurs numérique-analogique placés en dehors de la matrice de N lignes de pixels. Dans la structure de la figure 1, on prévoit une matrice de circuits de conversion (échantillonnage et conversion analogique-numérique), un circuit de conversion respectif étant associé à chaque pixel de la matrice, et un deuxième décodeur de ligne DEC2 servant à sélectionner une ligne de circuits de conversion lorsque la ligne de pixels associée est sélectionnée par le convertisseur DEC1.

Ainsi, lorsqu'une ligne de pixels est sélectionnée pour une lecture des signaux (potentiels) engendrés par les pixels de cette ligne en fonction de l'image qui défile devant cette ligne pendant une période Tp, on sélectionne en même temps une ligne d'échantillonneurs et convertisseurs. On produit un résultat numérique pour chaque pixel. Ce résultat est additionné avec les résultats obtenus à la période précédente par la ligne de pixels précédente qui a vu la même portion d'image dans cette période précédente. L'addition est numérique.

Un circuit général de séquencement SEQ, établit les signaux de commande nécessaires pour des décodeurs DEC1 et DEC2 et pour un circuit de commande ADCCTRL. Le circuit SEQ est commandé par un signal d'horloge CLK qui cadence l'ensemble de la lecture.

Le circuit ADCCTRL est un circuit de pilotage des convertisseurs, qui fournit une rampe et une horloge de comptage et des impulsions de commande de conversion à des moments bien déterminés.

Enfin, le décodeur DEC2 établit aussi les impulsions de commande d'échantillonnage de chaque ligne de circuits de conversion.

La figure 2 représente un exemple de pixel individuel Pᵢ de rang i en colonne, formé sur un substrat semiconducteur. Les pixels sont de préférence de forme généralement carrée (représentée par un trait pointillé) et répartis à un pas D aussi bien en ligne qu'en colonne, dans le cas général où on désire la même résolution en ligne et en colonne. Le pixel Pᵢ est un pixel actif de type classique ; il comporte :
- une photodiode PPD, en général une photodiode dite "pinned", c'est-à-dire ayant un potentiel de surface fixé par une fine couche superficielle dopée qui la recouvre ;
- un noeud de stockage de charges ND qui est une diffusion de type N+ dans le substrat ;
- une grille de transfert (hachurée) entre la photodiode et le noeud de stockage, pouvant être commandée par un signal de transfert TRA qui transfère les charges générées dans la photodiode vers le noeud de stockage ;
- un transistor de lecture ayant un drain relié à une tension d'alimentation Vdd, une grille (hachurée) reliée au noeud de stockage ND, et une source ; ce transistor reporte sur sa source un potentiel qui représente le potentiel du noeud de stockage ;
- un transistor de sélection de ligne ayant une grille commandée par un signal SEL issu d'un conducteur de ligne commun à tous les pixels d'une même ligne et provenant du décodeur DEC1 ; le drain du transistor de sélection est relié à la source (ou constitué par la même diffusion que la source) du transistor de lecture ; la source du transistor de sélection est reliée au conducteur de colonne CC qui constitue la sortie de tous les pixels d'une même colonne ; le potentiel du noeud de stockage est reporté sur le conducteur de colonne lorsque le pixel est sélectionné par le signal SEL ;
- une grille de réinitialisation du potentiel du noeud de stockage, commandée par un signal de réinitialisation RST, située entre le noeud de stockage et un drain porté à un potentiel de référence Vref ;
- et enfin, facultativement, une grille de réinitialisation globale du potentiel de la photodiode, située entre la photodiode et un drain porté à un potentiel de référence qui peut être Vref ; cette grille, commandée par un signal GR, permet d'empêcher la photodiode d'accumuler des charges pour définir un temps d'intégration de charges désiré pour tous les pixels de la matrice.

Le pixel Pᵢ fournit sur le conducteur de colonne CC :
- d'abord un potentiel de réinitialisation après réinitialisation du noeud ND par le signal RST ;
- puis un potentiel de signal utile, après transfert de charges de la photodiode vers le noeud ND par le signal TRA.

L'ordre de ces opérations est important pour l'obtention d'une mesure par double échantillonnage corrélé véritable permettant de minimiser le bruit de lecture de type kTC au moment de l'échantillonnage.

Ces deux potentiels sont fournis, lors de la sélection de la ligne de rang i par le décodeur DEC1, au circuit d'échantillonnage de rang i qui est sélectionné aux mêmes moments par le décodeur DEC2.

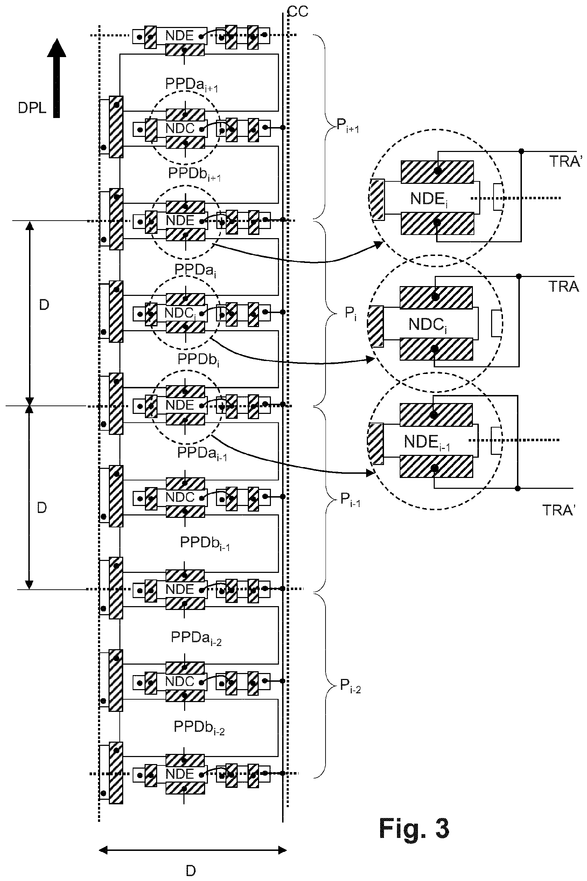

La figure 3 représente une vue d'une colonne de pixels d'un capteur selon l'invention. Elle fait partie d'une structure générale conforme à la figure 1 mais la structure du pixel est différente de celle de la figure 2 et va être expliquée par comparaison avec le pixel de la figure 2.

Le pixel a là encore une forme généralement carrée représentée par des traits pointillés et le pas de répartition des pixels est D, de préférence aussi bien dans le sens des lignes que dans le sens des colonnes. La durée d'un cycle d'intégration et lecture des charges d'un pixel est Tp = D/V. Mais le pixel comprend maintenant deux photodiodes et trois noeuds de stockage qui sont un noeud de stockage aval, un noeud de stockage amont et un noeud de stockage central. Toutefois le noeud de stockage aval est partagé avec le pixel situé immédiatement en aval et le noeud de stockage amont est partagé avec le pixel situé immédiatement en amont de sorte que s'il y a N pixels dans la colonne, il y a au total 2N noeuds de stockage dans la colonne et non pas 3N. Le côté amont et le côté aval sont pris en référence à la direction de déplacement de l'image, représentée par la flèche DPL.

Sur la figure 3, le pixel Pᵢ de rang i comporte une photodiode PPDaᵢ et une photodiode PPDbᵢ, un noeud de stockage central NDCᵢ situé entre les photodiodes mais séparé de chacune d'elles par une grille de transfert respective, un noeud de stockage aval NDEᵢ qui est le noeud de stockage amont du pixel Pᵢ₊₁ situé immédiatement en aval du pixel Pᵢ, et enfin un noeud de stockage amont NDEᵢ₋₁ qui est le noeud aval du pixel amont Pᵢ₋₁. Des grilles de transfert respectives permettent de commander le transfert des charges de la photodiode PPDaᵢ soit vers le noeud central NDCᵢ soit vers le noeud aval NDEᵢ. De même, des grilles respectives permettent de transférer des charges de la photodiode PPDbᵢ soit vers le noeud central NDCᵢ soit vers le noeud amont NDEᵢ₋₁. Les grilles correspondant au noeud central sont commandées simultanément par un signal de transfert TRA correspondant à un transfert de charges interne à l'intérieur du pixel ; les grilles correspondant aux noeuds externes, aval et amont, sont commandées par un signal de transfert TRA' qui commande le transfert de charges en provenance de deux pixels différents vers un même noeud de stockage qui est un noeud aval pour l'un des pixels et amont pour l'autre pixel.

Les photodiodes ont été représentées ici avec des surfaces rectangulaires pour permettre de loger dans le carré de côté D les deux photodiodes, le noeud de stockage central, la moitié des noeuds de stockage aval et amont, et les grilles de transfert et autres éléments de fonctionnement associés à chaque noeud. Ces autres éléments (transistor de lecture, transistor de sélection, grilles et drains de réinitialisation) ont la même disposition et les mêmes fonctions que dans le pixel de la figure 2, résumées ci-dessous :
- grilles de réinitialisation de chaque noeud de stockage commandées par des signaux de réinitialisation,
- transistor de lecture ayant sa grille reliée au noeud de stockage et sa source reliée au conducteur de colonne CC,
- transistor de sélection de ligne commandé par un signal de sélection (attention : la sélection des noeuds de stockage est individuelle, c'est-à-dire que des signaux de sélection différents permettent de lire le potentiel de n'importe quel noeud de stockage) ;
- grille facultative de réinitialisation globale du potentiel des photodiodes, commandée par un signal GR.

Le principe de l'invention est le suivant : comme à la figure 1, un circuit de conversion analogique-numérique respectif CONVᵢ de rang i est associé à chaque pixel de rang i ; sous l'appellation simplifiée "circuit de conversion", on inclut ici à la fois un circuit d'échantillonnage des potentiels à convertir et le convertisseur analogique-numérique proprement dit qui convertit le potentiel échantillonné (en fait une différence de deux échantillons de potentiel) en une valeur numérique. De plus, comme on le verra, il est préférable que le circuit de conversion associé à un pixel exécute directement une fonction d'addition numérique pour additionner un résultat issu d'un pixel dans un cycle périodique et un résultat issu d'un autre pixel dans un cycle précédent. La fonction d'addition de N valeurs issus de N pixels différents qui voient la même portion d'image est dans ce cas distribuée dans les différents circuits de conversion ; on considérera donc que l'appellation "circuit de conversion" inclut aussi cette fonction d'addition distribuée.

Selon l'invention, des moyens de commande des grilles de transfert et des circuits d'échantillonnage et de conversion sont prévus pour assurer le cycle périodique suivant, ayant deux phases de durées égales ; la période Tp correspond au défilement de l'image sur un pas D des lignes de pixels. Les deux phases se chevauchent en partie comme on le verra.

### 1. première phase

Les charges intégrées par les deux photodiodes pendant cette phase sont transférées dans le noeud central NDCᵢ, puis les charges du noeud central sont converties dans le circuit de conversion de rang i CONVᵢ associé au pixel de rang i, en même temps que les charges des autres noeuds centraux sont converties dans les circuits de conversion associés aux autres pixels.

### 2. deuxième phase,

a). les charges intégrées pendant cette phase par la première photodiode PPDaᵢ du pixel de rang i, ainsi que les charges intégrées pendant cette phase par la deuxième photodiode PPDbᵢ₊₁ du pixel de rang i+1 (pixel immédiatement en aval), sont transférées dans le noeud de stockage aval NDEᵢ ; de même, les charges de la deuxième photodiode PPDbᵢ du pixel de rang i ainsi que les charges de la première photodiode PPDaᵢ₋₁ du pixel de rang i-1 (pixel amont) sont transférées dans le noeud amont NDEᵢ₋₁,
b). puis les charges présentes dans le noeud aval NDEᵢ sont converties dans le circuit de conversion CONVᵢ de rang i ; de même, les charges présentes dans le noeud amont NDEᵢ₋₁, qui est en même temps le noeud aval du pixel Pᵢ₋₁, sont converties par le circuit de conversion CONVᵢ₋₁ de rang i-1.

Les résultats de la conversion effectuée par le circuit de conversion de rang i au cours de ces deux phases sont accumulés dans ce circuit et viennent s'ajouter au résultat accumulé dans le circuit de conversion de rang i-1 à la fin du cycle précédent.

L'addition numérique relative aux différents pixels qui ont vu la même portion d'image se fait de préférence de la manière suivante : le circuit de conversion CONVᵢ comprend de préférence un convertisseur à rampe comprenant un compteur qui compte à une fréquence donnée pendant une durée définie par la différence de potentiels à convertir ; la différence entre le contenu final du compteur et le contenu initial représente une valeur analogique de cette différence de potentiel. On connecte alors les compteurs des différents circuits de conversion de manière que le contenu du compteur du circuit de rang i-1 soit appliqué comme contenu initial du compteur du circuit de rang i avant le déclenchement de la nouvelle conversion.

L'accumulation numérique des résultats de conversion des deux phases se fait en ne réinitialisant pas le contenu du compteur après la fin de la première phase, c'est-à-dire en conservant comme contenu initial du compteur au début de la deuxième phase le contenu du compteur à la fin de la première phase. Le contenu du compteur à la fin de la deuxième phase représente la somme des résultats de conversion des deux phases.

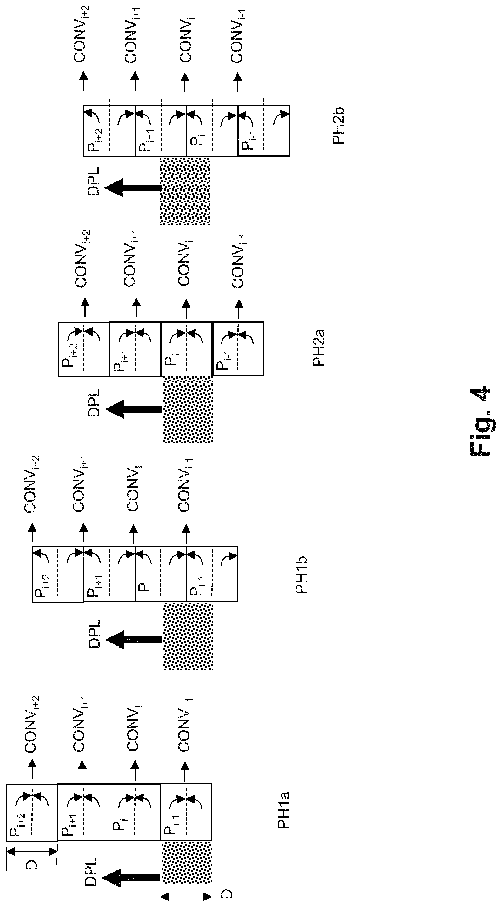

La figure 4 illustre le processus qui vient d'être décrit. On y voit la manière dont les charges des photodiodes des pixels sont alternativement dirigées vers le noeud central puis vers les noeuds aval et amont pour que dans la deuxième phase on additionne des charges en provenance de celles des photodiodes qui ont vu la même portion d'image que dans la première phase bien que l'image se soit déplacée de D/2 entre les deux phases.

Quatre étapes sont représentées et correspondent respectivement à la fin de chaque phase PH1a, PH1b, PH2a, PH2b de deux cycles successifs pendant lesquels l'image s'est déplacée de deux fois le pas D devant une ligne d'image de largeur D. Les pixels sont représentés par des carrés adjacents de largeur D ; les noeuds de stockage aval et amont sont figurés par la ligne de séparation entre deux carrés ; les noeuds de stockage centraux sont représentés par une ligne tiretée horizontale au milieu du carré. La ligne d'image est représentée à une position fixe par une zone tachetée de largeur D (largeur comptée dans le sens du défilement) ; le déplacement relatif des pixels du capteur par rapport à l'image se fait de l'aval vers l'amont (du haut vers le bas de la figure) devant cette bande. La ligne d'image tachetée est représentée à côté du capteur pour que la figure reste lisible.

Les flèches courbes représentent le transfert des charges dans les noeuds centraux (première phase PH1a, PH2a de chacun des cycles) puis dans les noeuds aval et amont, c'est-à-dire entre deux pixels (deuxième phase PH1b, PH2b des cycles).

Les numéros de circuit de conversion inscrits à la droite des pixels en regard des emplacements de noeuds de stockage indiquent quel circuit reçoit les potentiels correspondant à chaque noeud pour les échantillonner et les convertir. On voit que
- le convertisseur de rang i-1 convertit d'abord (PH1a) depuis le noeud central les charges accumulées par les deux photodiodes du pixel Pᵢ₋₁, puis convertit (PH1b) à partir du noeud aval les charges issues de la photodiode aval du pixel Pᵢ₋₁ et la photodiode amont du pixel Pᵢ ; dans la deuxième phase on utilise donc un groupe de deux photodiodes qui ont vu la même ligne d'image que celles de la première phase ;
- dans le cycle suivant PH2a, PH2b on fait la même chose, mais si on considère la même ligne d'image c'est avec le pixel Pᵢ et le convertisseur CONVᵢ que les opérations commencent ; c'est pourquoi le deuxième cycle doit additionner les résultats de la conversion faite par le circuit de conversion CONVᵢ (associé au pixel Pᵢ) aux résultats de la conversion faite au cycle précédent par le circuit de conversion CONVᵢ₋₁.

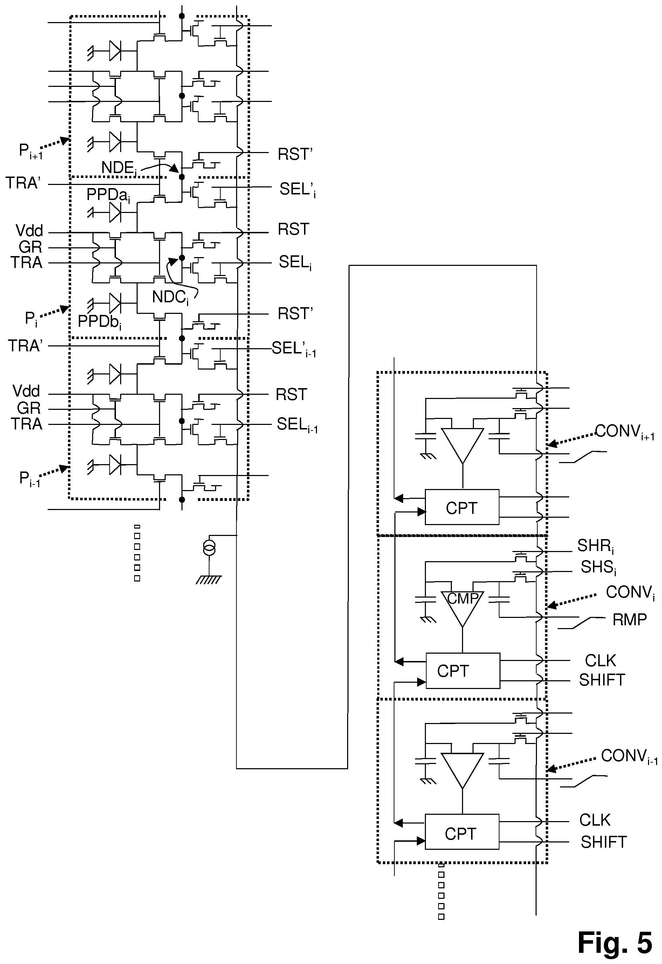

La figure 5 représente une colonne de pixels (trois pixels successifs Pᵢ₋₁, Pᵢ, Pᵢ₊₁) avec les circuits de conversion associés à ces pixels (CONVᵢ₋₁, CONVᵢ, CONVᵢ₊₁). Un conducteur de colonne CC relie les sorties de tous les pixels et transmet aux circuits de conversion les potentiels des noeuds de stockage. Les pixels sont représentés sous forme de circuiterie électrique et correspondent à la description physique faite en relation avec les figures 2 et 3.

La configuration décrite ci-dessous suppose que la lecture est faite par double échantillonnage corrélé dans laquelle on effectue dans l'ordre les opérations suivantes : réinitialisation du noeud de stockage, échantillonnage du niveau de réinitialisation, puis transfert de charges des photodiodes vers les noeuds de stockage et enfin échantillonnage du niveau de potentiel utile représentant les charges.

Par ailleurs, dans l'exemple de réalisation de la figure 5, le circuit de conversion de rang i comprend :
- deux capacités d'échantillonnage, l'une pour stocker un niveau de potentiel de réinitialisation sous la commande d'un premier signal d'échantillonnage SHRᵢ, l'autre pour stocker un niveau de potentiel utile sous la commande d'un deuxième signal d'échantillonnage SHSᵢ ; les signaux SHRᵢ et SHSᵢ sont émis en synchronisme avec la mise en communication, par un signal SELᵢ ou SELᵢ, d'un noeud de stockage (NDCᵢ ou NDEᵢ) avec le conducteur de colonne ;
- un générateur de rampe de tension linéaire qui peut être commun à tous les circuits de conversion et qui fournit une rampe de tension RMP ; cette rampe est appliquée à une borne de la deuxième capacité ;
- un comparateur CMP dont les entrées sont reliées aux deux capacités, qui a initialement un premier état en début de conversion et qui bascule dans un deuxième état lorsque le potentiel sur sa deuxième entrée atteint, sous l'influence de la rampe appliquée à la deuxième capacité, le potentiel sur sa première entrée ;
- un compteur CPT qui compte des impulsions à une fréquence fixe à partir du début de la rampe et qui s'arrête de compter sous la commande du comparateur lorsque le comparateur bascule ; on a représenté pour simplifier un signal d'horloge CLK dont il faut comprendre qu'il autorise le comptage seulement à partir du début de la rampe de tension RMP.

Le contenu du compteur est incrémenté au cours de la rampe de tension d'une valeur qui représente la différence entre le potentiel de réinitialisation et le potentiel utile. Cependant, comme on le verra, le contenu initial du compteur peut être imposé à partir du contenu final (au cycle précédent) du compteur situé en amont, pour effectuer directement dans le circuit de conversion CONVᵢ de rang i la somme d'un résultat courant avec le contenu obtenu dans le compteur du circuit de rang précédent CONVᵢ₋₁ à la fin du cycle précédent. Ainsi, le contenu du compteur à la fin d'un N^{ième} cycle représente la somme des résultats de la conversion des charges recueillies dans N pixels ayant vu la même portion d'image au cours de N cycles de lecture successifs. Un signal SHIFT autorise le transfert du résultat du convertisseur CONVᵢ₋₁ dans le compteur du convertisseur CONVᵢ.

Le noeud de stockage central du pixel Pᵢ peut être relié au conducteur de colonne par un conducteur de sélection de ligne SELᵢ. Le noeud de stockage aval NDEᵢ peut être sélectionné séparément par un conducteur de sélection de ligne SEL'ᵢ. Les noeuds de stockage centraux NDCᵢ peuvent être réinitialisés tous simultanément par un signal RST, et de même les noeuds de stockage aval et amont peuvent être réinitialisés tous simultanément par un signal RST'. Les charges peuvent être transférées des deux photodiodes d'un pixel vers le noeud central NDCᵢ par un signal TRA commun à tous les pixels ; de même, les charges peuvent être transférées des deux photodiodes vers les noeuds aval et amont par un signal TRA' commun à tous les pixels.

Un signal GR commun à tous les pixels permet de réinitialiser le potentiel de toutes les photodiodes après une durée d'intégration choisie.

Le fait que les signaux de transfert TRA et TRA' soient communs à tous les pixels permet de travailler selon un mode de fonctionnement de type global shutter qui est avantageux car tous les pixels sont éclairés simultanément pendant la même durée d'intégration et non pas pendant des périodes de temps échelonnées en fonction du rang i de la ligne de pixels. Le fait que le signal de réinitialisation globale GR soit commun à tous les pixels permet de plus que la durée d'intégration commune soit réglable.

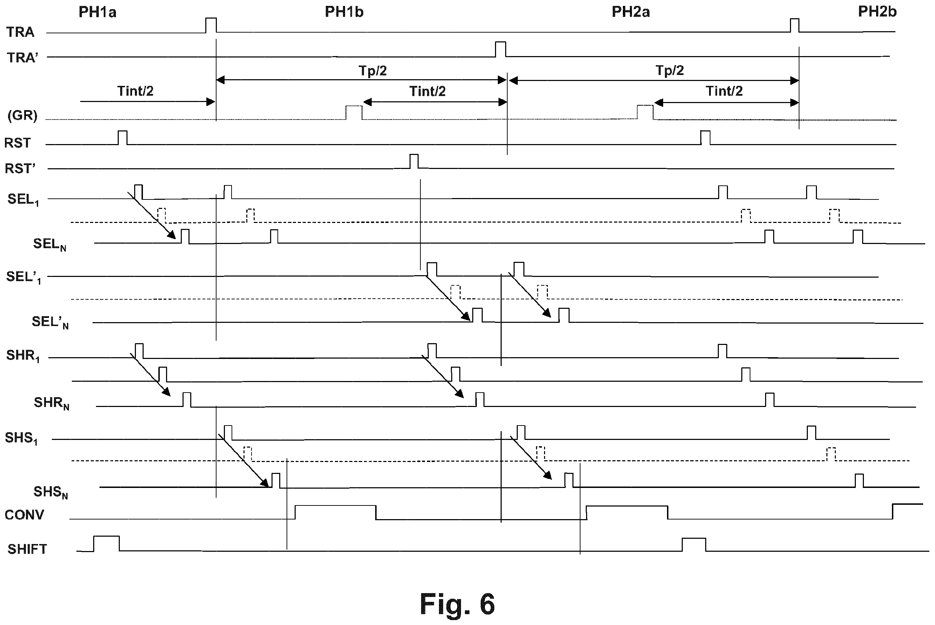

Le circuit de la figure 5 fonctionne de la manière suivante, expliquée en référence au chronogramme de la figure 6 qui représente les deux phases PH1a et PH1b, puis PH2a, PH2b de deux cycles de mesure de période Tp.

Les signaux suivants sont représentés :
- TRA qui commande le transfert de charges des photodiodes vers les noeuds centraux avec une périodicité Tp, et TRA' qui commande le transfert vers les noeuds aval et amont également avec une périodicité Tp, les signaux TRA' étant décalés de Tp/2 par rapport aux signaux TRA ;
- RST et RST' signaux de remise à zéro, de périodicité Tp, décalés de Tp/2 l'un par rapport à l'autre ;
- GR, facultatif, de périodicité Tp/2, la fin du signal GR étant à la même position temporelle par rapport à la fin du signal TRA et par rapport à la fin du signal TRA' ;
- SEL₁ à SEL_{N}, signaux de sélection des lignes 1 à N, pendant lesquels les noeuds de stockage centraux sont reliés au conducteur de colonne CC, que ce soit pour une mesure de potentiel de réinitialisation ou pour une mesure de potentiel d'éclairement ;
- SEL'₁ à SEL'_{N}, signaux de sélection successive des lignes 1 à N, pendant lesquels les noeuds de stockage aval sont reliés au conducteur de colonne, là encore pour une mesure de potentiel de réinitialisation ou de potentiel utile ;
- SHR₁ à SHR_{N}, signaux d'échantillonnage des niveaux de potentiel de réinitialisation dans la première capacité des circuits de conversion respectifs CONV₁ à CONV_{N} ; ces signaux sont produits en correspondance avec les signaux de sélection de ligne : le signal SHRᵢ du circuit CONVᵢ est émis pendant que le signal SELᵢ sélectionne les noeuds centraux de la ligne de rang i, et il est à nouveau émis pendant que le signal SEL'i sélectionne les noeuds aval de cette ligne ; l'échantillonnage des niveaux de réinitialisation se fait donc deux fois par cycle dans chaque circuit de conversion (dans la même capacité) ;
- SHS₁ à SHS_{N}, signaux d'échantillonnage des niveaux de potentiel d'éclairement dans la deuxième capacité des circuits de conversion respectifs CONV₁ à CONV_{N} ; ces signaux sont également produits en correspondance avec les signaux de sélection de ligne : le signal SHSᵢ du circuit CONVᵢ est émis pendant que le signal SELᵢ sélectionne les noeuds centraux de la ligne de rang i, et il est à nouveau émis pendant que le signal SEL'i sélectionne les noeuds aval de cette ligne ; l'échantillonnage des niveaux de potentiel utile se fait deux fois par cycle dans chaque circuit de conversion (dans la même capacité) ;
- CONV : commande de conversion, simultanée dans tous les circuits de conversion, après le signal d'échantillonnage SHS_{N} de la dernière ligne ; la commande de conversion déclenche la rampe de tension et le comptage par les compteurs ; elle se fait deux fois par cycle, d'abord après l'échantillonnage des potentiels utiles de tous les noeuds centraux puis après l'échantillonnage des potentiels utiles des noeuds aval.
- enfin, le signal SHIFT commun à tous les convertisseurs, qui autorise le transfert du contenu du convertisseur de rang i-1 dans le compteur du convertisseur de rang i pour initialiser ce compteur à une valeur qui représente un cumul de résultats de conversion des lignes de rang 1 à i-1 qui ont vu la même portion d'image que le convertisseur de rang i ; la conversion produira un résultat qui s'ajoutera à ce contenu initial.

La durée d'intégration de charges à l'intérieur de chaque phase est soit Tp/2, soit une durée Tint/2 inférieure à Tp/2 et réglable par l'ajustement de la position du signal GR lorsque ce signal est utilisé. La fin du signal GR définit le début de la durée d'intégration pour tous les pixels. La fin des impulsions TRA et TRA' définit la fin de la durée d'intégration, respectivement de la première et la deuxième phase, puisque ces signaux vident le contenu des photodiodes vers des noeuds de stockage. Lorsque le signal GR n'est pas utilisé, la fin de l'impulsion TRA ou TRA' définit aussi le point de départ d'une nouvelle durée d'intégration.

Le cycle périodique en deux phases se déroule de la manière suivante :

### Première phase PH1a

- a) intégration de charges dans les photodiodes pendant une durée Tint/2 ; pendant cette durée, les convertisseurs convertissent les signaux échantillonnés à la phase précédente ;
- b) vers la fin de la durée d'intégration Tint/2, lorsque les signaux du cycle précédent ont été convertis, le signal SHIFT transfère les résultats accumulés dans les compteurs de rang i-1 vers les compteurs de rang i, pour tous les circuits de conversion, pour initialiser les compteurs en fonction de ces résultats avant une nouvelle conversion ;

- c) vers la fin de la durée d'intégration, avant ou pendant ou après le signal SHIFT, un signal RST global est émis pour réinitialiser le potentiel de tous les noeuds de stockage centraux ;
- d) après le signal RST, les noeuds de stockage centraux des lignes 1 à N sont sélectionnés successivement par les signaux SEL₁ à SEL_{N} ; le conducteur de colonne reçoit à chaque fois un potentiel de réinitialisation respectif et les signaux d'échantillonnage SHR₁ à SHR_{N} échantillonnent ces potentiels à chaque fois dans la première capacité du convertisseur correspondant ; les signaux SEL'ᵢ restent inactifs ;
- e) le signal TRA est émis et transfère les charges de toutes les photodiodes vers les noeuds centraux ; la commande TRA' reste inactive ;
- f) après le signal TRA, les noeuds de stockage centraux des lignes 1 à N sont à nouveau sélectionnés successivement par les signaux SEL₁ à SEL_{N} ; le conducteur de colonne reçoit à chaque fois un potentiel utile représentant les charges stockées dans un noeud de stockage central ; les signaux d'échantillonnage SHR₁ à SHR_{N} échantillonnent ces potentiels utiles à chaque fois dans la deuxième capacité du convertisseur correspondant ; les signaux SEL'ᵢ restent inactifs ; les potentiels utiles sont donc échantillonnés après le transfert de charge vers les noeuds dont le potentiel de réinitialisation a été échantillonné, permettant un double échantillonnage corrélé véritable ;
- g) après tous ces échantillonnages de potentiels de réinitialisation et de potentiels utiles, la commande de conversion CONV est appliquée à tous les convertisseurs simultanément ; cette commande déclenche la rampe de tension et le comptage des compteurs ; le compteur s'incrémente en fonction des différences de potentiel échantillonnées dans le convertisseur.

Les étapes f et g sont considérées dans ce qui précède et dans ce qui suit comme faisant partie de la phase PH1a car elles sont relatives aux charges intégrées pendant la phase PH1a, mais elles se déroulent alors que la deuxième phase PH1b a commencé, c'est-à-dire alors que des charges ont recommencé à être intégrées dans les photodiodes après la fin du signal de transfert TRA. Les deux phases sont donc identiques mais se chevauchent en partie.

### Deuxième phase PH1b

La deuxième phase se déroule de la même manière mais concerne les noeuds aval et non les noeuds centraux. Par conséquent, dans la deuxième phase, le signal TRA devient inactif et est remplacé par le signal TRA' ; les signaux SEL₁ à SEL_{N} deviennent inactifs et sont remplacés par les signaux SEL'₁ à SEL'_{N},

D'autre part, contrairement à la première phase, il n'y a pas d'émission d'un signal SHIFT, c'est-à-dire que les compteurs ne sont pas réinitialisés. Ils gardent le résultat qu'ils ont acquis à la fin de la conversion des charges intégrées pendant la première phase ; la conversion des charges générées pendant la deuxième phase PH1b incrémente donc les compteurs à partir du résultat cumulé de la première phase. Ce n'est qu'après la fin de cette deuxième conversion que le signal SHIFT sera à nouveau émis.

Le circuit de conversion de rang N CONV_{N} accumule les résultats des éclairements vus par les N circuits de conversion au cours de N cycles successifs et correspondant à la même portion d'image. Il fournit un résultat global de mesure. Ce résultat sort avec la périodicité Tp.

La structure selon l'invention engendre un bruit inférieur à celui que produirait une structure ordinaire dans laquelle les charges de deux photodiodes adjacentes seraient transférées toujours chacune dans son propre noeud de stockage. En effet, le transfert dans la structure de l'invention réalise une addition de charges sans bruit et les sommations numériques qui engendrent du bruit ne sont faites qu'après cette sommation analogique de charges.

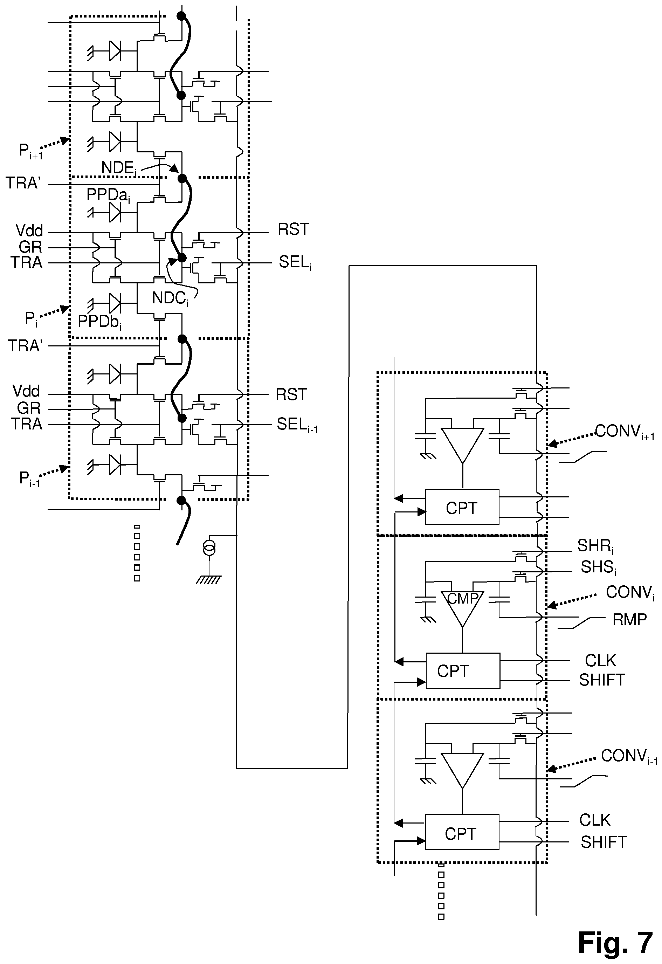

Dans ce qui précède, on a considéré que le noeud de stockage aval et le noeud de stockage central sont associés chacun à un transistor de réinitialisation, un transistor de lecture et un transistor de sélection de ligne. C'est pourquoi il faut alors un signal de sélection de ligne SEL'ᵢ pour le noeud aval, différent du signal de sélection de ligne SELᵢ du noeud central. Mais on peut aussi envisager une solution un peu différente : tout en ayant des noeuds de stockage différents qui encadrent chaque photodiode, avec des signaux TRA et TRA' distincts comme décrit précédemment, on peut prévoir de relier électriquement les deux noeuds par un conducteur électrique (ce conducteur prenant un contact sur les deux noeuds qui sont en pratique des diffusions de type N dans le circuit intégré). Cette variante de réalisation est représentée à la figure 7 où on voit que les noeuds central NDCᵢ et aval NDEᵢ sont connectés par un conducteur.

Les deux noeuds physiquement différents, dont l'un va recevoir des charges mais pas l'autre, deviennent alors électriquement un noeud commun en ce sens qu'ils sont réinitialisés simultanément, puis lus simultanément.

Dans la phase PH1a, les deux noeuds sont réinitialisés simultanément par un seul transistor de réinitialisation commandé par un seul signal RST ; leur niveaux de réinitialisation commun est échantillonné (signal SELᵢ et simultanément signal SHRᵢ) ; puis les charges de deux photodiodes sont transférées dans un noeud par le signal TRA (c'est alors le noeud central qui reçoit les charges des deux photodiodes qui encadrent ce noeud) ; dans la phase PH1b, les charges continuent à être intégrées dans les photodiodes et sont ensuite transférées à nouveau dans le noeud commun, sans réinitialisation intermédiaire, par le signal TRA' (c'est alors le noeud aval qui reçoit les charges des deux photodiodes qui l'encadrent). Les charges reçues dans ces deux phases s'additionnent analogiquement (sans bruit) dans le noeud de stockage commun et ne sont converties en numérique qu'après cette addition. Une seule conversion est donc faite pour chaque période Tp, ce qui réduit le bruit et qui relâche les contraintes de rapidité pour les convertisseurs.

Le potentiel qui en résulte sur le noeud commun est appliqué au conducteur de colonne par le transistor de lecture et le transistor de sélection (SELᵢ) commun aux deux noeuds reliés ; il est échantillonné par l'impulsion SHSᵢ simultanée avec SELᵢ. Il n'y a pas de conducteur de sélection SEL'ᵢ.

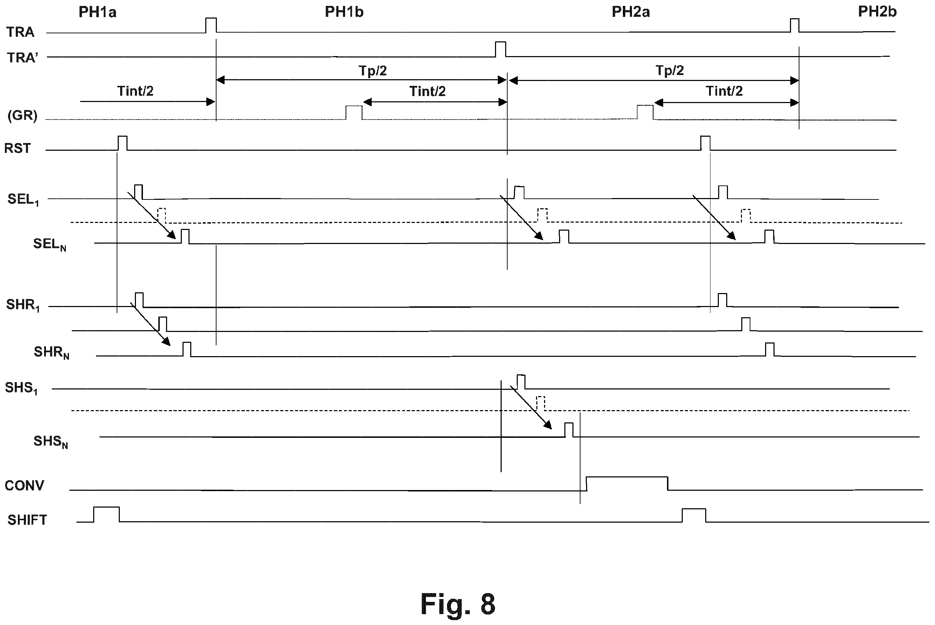

Dans cette réalisation, le chronogramme est celui de la figure 8 ; les différences par rapport à la figure 6 sont les suivantes :
- il n'y a qu'un signal de réinitialisation RST de périodicité Tp/2, avant le signal TRA mais pas avant TRA' ;
- les signaux SHR et SHS qui suivent le signal ont une périodicité de Tp et non Tp/2, les signaux SHR suivant l'impulsion RST et étant antérieures au signal TRA, les signaux SHS suivant les impulsions TRA' ;
- les signaux SEL₁ à SEL_{N} sont synchrones des signaux SHR₁ à SHR_{N} respectivement, ainsi que des signaux SHS₁ à SHS_{N} ; il n'y a pas de signaux SEL'.
- et les impulsions de conversion ont une périodicité Tp et non Tp/2 et suivent le dernier signal SHS_{N}.

Là encore, on peut fonctionner en mode global shutter, avec une durée d'intégration réglable, et avec une lecture par double échantillonnage corrélé véritable.

La description des figures 3 à 8 est relative à un capteur fonctionnant périodiquement avec deux phases ; on pourrait cependant envisager également un plus grand nombre de phases. Le pixel de forme générale carrée est divisé en un plus grand nombre de photodiodes, avec plusieurs noeuds de stockage centraux entre les photodiodes du pixel, et en outre un noeud de stockage aval partagé avec le pixel aval et un noeud de stockage amont partagé avec le pixel amont.

Il est nécessaire alors que les circuits de conversion soient capables d'échantillonner plusieurs valeurs de potentiel de réinitialisation de noeuds de stockage et plusieurs valeurs de potentiel utiles au cours d'une même phase ; ce sont des circuits assurant une multiple conversion à chaque étape de conversion (et il y a une étape de conversion pour chaque phase). Plus précisément, s'il y a P phases, il faut échantillonner au cours d'une phase P-1 niveaux de réinitialisation et P-1 niveaux utiles et convertir P-1 différences de potentiel séparément ; les résultats des P-1 conversions sont ajoutés numériquement.

Par exemple, s'il y a trois phases, il y a trois photodiodes dans chaque pixel, un noeud de stockage aval partagé, un noeud de stockage amont partagé, et deux noeuds de stockage centraux qu'on peut appeler noeud central aval et noeud central amont.

Il y a alors une permutation circulaire de l'utilisation des noeuds de stockage permettant de transférer les charges d'une photodiode dans un sens qui tend à ramener vers un groupe de noeuds qui varie à chaque phase les charges des photodiodes qui voient la même portion d'image au cours de ces phases. P-1 noeuds sont utilisés, un P^{ième} noeud n'est pas utilisé et ce noeud tourne par permutation circulaire.

La fonction de transfert de modulation, qui passe de 0,64 à 0,90 lorsqu'on passe d'une phase à deux phases, est encore améliorée et devient 0,95 avec trois phases

On pourrait utiliser aussi une structure à quatre phases, qui améliore encore la fonction de transfert de modulation, mais cette augmentation est de moins en moins significative au fur et à mesure que le nombre de phases augmente. Avec quatre phases la valeur théorique de la fonction est de 0,97 et l'amélioration n'est donc que d'environ 2%.

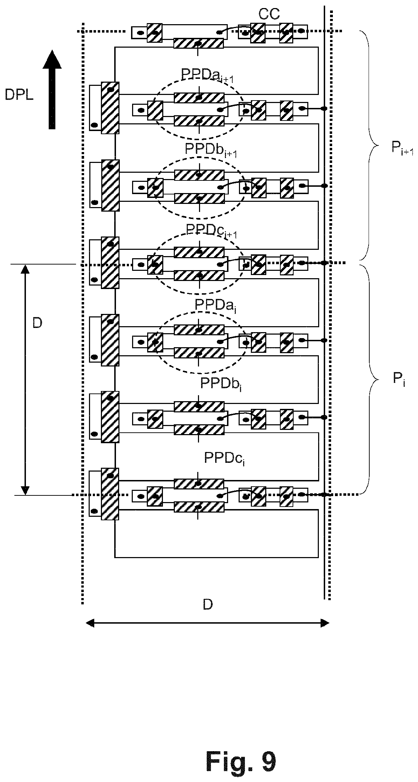

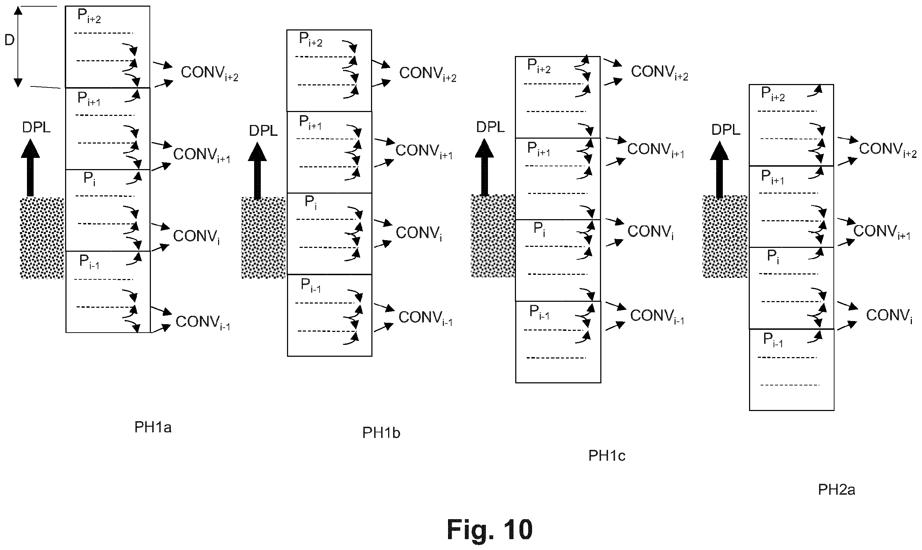

La figure 9 représente une structure pour trois phases, avec trois photodiodes PPDaᵢ, PPDbᵢ, PPDcᵢ par pixel de forme généralement carrée. La figure 10 représente, selon le même principe que la figure 4, le schéma de capture d'une image en trois phases PH1a, PH1b, PH1c, montrant la permutation circulaire de l'amont vers l'aval du noeud non utilisé.

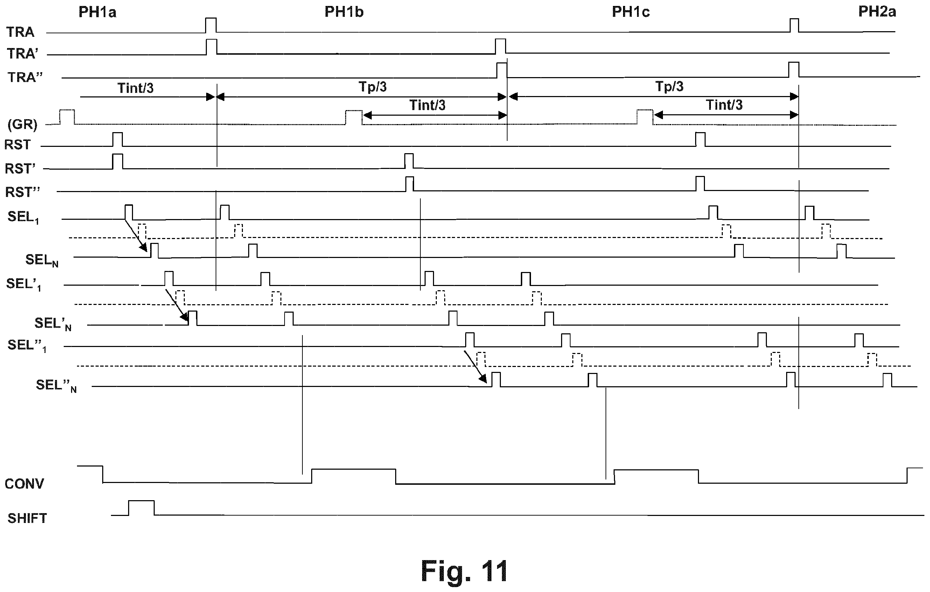

La figure 11 représente le chronogramme de fonctionnement en trois phases, avec des signaux de transfert TRA, TRA' et TRA", associés à chacun des trois noeuds de stockage d'un pixel et communs à tous les pixels, des signaux de réinitialisation RST, RST' et RST" associés à chacun des noeuds d'un pixel et communs à tous les pixels, des signaux de sélection de ligne SEL, SEL' et SEL" associés à chacun des noeuds d'un pixel et spécifiques à chaque pixel de 1 à N. Les signaux d'échantillonnage SHR et SHS ne sont pas représentés pour ne pas compliquer la figure ; ils sont synchronisés avec les signaux de sélection de ligne et il faut comprendre qu'il y a deux séries d'échantillonnage et deux séries de conversion faites à chaque phase puisque deux noeuds de stockage sur trois reçoivent des charges de photodiodes adjacentes à chaque phase, Ces échantillonnages se font successivement s'il n'y a qu'un conducteur de colonne. Le signal de conversion CONV représente la commande de conversion simultanée de deux différences de potentiels analogiques. Il est répété à chaque phase, donc avec une périodicité Tp/3. Le signal SHIFT représente l'initialisation des compteurs des circuits de conversion à partir du contenu d'un compteur de rang précédent à la fin du cycle précédent. Il est émis avec la périodicité Tp.

Pour chaque phase on a deux signaux de réinitialisation simultanés, le troisième étant inactif et une permutation circulaire lorsqu'on change de phase. De même, on a deux signaux de transfert simultanés et le troisième inactif. En ce qui concerne les signaux de sélection de ligne, ils ne peuvent pas être simultanés s'il n'y a qu'un conducteur de colonne, et dans ce cas ils se succèdent : une série de signaux SEL'₁ à SEL'_{N} succède à une série SEL₁ à SEL_{N}. Là encore chaque phase utilise deux séries de signaux, par exemple SEL₁ à SEL_{N} et SEL'₁ à SEL'_{N}, la troisième étant inactive et on effectue pour les autres phases une permutation circulaire.

Pour un pixel de rang i lu par un circuit de conversion de rang i :
Phase 1 : on réinitialise d'abord le noeud amont et le noeud central amont d'un pixel de rang i ; on échantillonne ligne par ligne les deux potentiels de réinitialisation ; puis on autorise le transfert de charges des photodiodes vers ces deux noeuds (les charges de la photodiode qui est entre les deux noeuds se partagent entre les deux noeuds) ; on échantillonne ligne par ligne les potentiels utiles de ces noeuds ; on convertit simultanément ou successivement deux différences de potentiel dans un circuit de conversion de rang i qui a été préalablement initialisé à partir du pixel précédent qui a vu la même portion d'image ; le noeud central aval est inutilisé et ne reçoit pas de charge.
Phase 2 : on réinitialise les deux noeuds centraux ; on échantillonne les deux potentiels de réinitialisation dans le même circuit de conversion qui n'a pas été réinitialisé après la phase 1 ; on autorise ensuite le transfert de charges des photodiodes vers les deux noeuds considérés (les charges des photodiodes adjacentes à ces deux noeuds se partagent) ; on échantillonne et on convertit à nouveau deux différences d'échantillons dans le circuit de conversion ; le noeud amont reste inutilisé.
Phase 3 : même chose mais on utilise le noeud central aval et le noeud aval ; le noeud central amont n'est pas utilisé. Le noeud qui n'est pas utilisé subit donc une permutation circulaire.

Après la phase 3, on transfère, simultanément pour tous les pixels, les résultats de comptage accumulés dans le convertisseur de rang i vers les compteurs du convertisseur de rang i+1 pour effectuer le cumul nécessaire.

Ainsi, au cours de la première phase PH1a, si on considère trois noeuds de stockage adjacents d'indice i :
- le niveau de réinitialisation d'un premier noeud de stockage, obtenu à la suite du signal RST est échantillonné dans une capacité d'échantillonnage pendant une première impulsion de sélection SELᵢ ;
- puis le niveau de réinitialisation d'un deuxième noeud, obtenu à la suite du signal RST' simultané avec RST, est échantillonné dans une autre capacité pendant une impulsion de sélection SEL'ᵢ ;
- puis les niveaux utiles sont stockés (après les impulsions de transfert simultanées TRA et TRA') dans deux autres capacités pendant une autre impulsion SELᵢ et une autre impulsion SEL'ᵢ ;
- puis deux conversions analogiques-numériques sont faites à partir des échantillons stockés dans quatre capacités.

A la phase suivante, on recommence avec le deuxième et le troisième noeuds de stockage, en utilisant des signaux de réinitialisation RST' et RST" au lieu de RST, RST', des signaux de sélection SEL' et SEL" au lieu de SEL et SEL', des signaux de transfert simultanés TRA' et TRA" au lieu de TRA et TRA', etc.

Et de même pour la troisième phase, par permutation circulaire.

La réinitialisation des compteurs n'est faite qu'à chaque nouveau cycle périodique de trois phases, ici avant la conversion des charges intégrées pendant la phase PH1a.

On remarquera que le capteur d'image selon l'invention a une structure qui peut fonctionner de manière bidirectionnelle, c'est-à-dire qu'on peut inverser le sens de défilement de l'image sans perdre le bénéfice du fonctionnement TDi ; il faut alors prévoir par exemple une inversion des connexions des compteurs, ou encore prévoir d'associer au pixel de rang i le convertisseur de rang N-i.

On peut également choisir d'accumuler les charges sur un nombre de pixels n inférieur à N si on le désire. Il faut alors remettre à zéro les compteurs au bout de n périodes et lire le résultat sur la sortie du n^{ième} compteur.

## Revendications

1. Capteur d'image à défilement et sommation de charges synchronisée avec le défilement relatif d'une scène à observer devant le capteur, comprenant N lignes de pixels à photodiodes et grilles de transfert de charges, les N lignes de pixels étant réparties avec un pas D, avec chaque pixel de rang i en colonne comprenant une première et une deuxième photodiodes (PPDaᵢ, PPDbⱼ) disposées successivement dans le sens du défilement et trois noeuds de stockage de charges séparés des photodiodes par des grilles de transfert de charges, les noeuds de stockage comprenant un noeud central (NDCᵢ) situé entre les deux photodiodes et deux autres noeuds, partagés avec les pixels adjacents, qui sont un noeud aval (NDEᵢ) situé entre la première photodiode du pixel de rang i et la deuxième photodiode du pixel de rang i+1 situé immédiatement en aval du pixel de rang i, et un noeud amont (NDEᵢ₋₁) situé entre la deuxième photodiode du pixel de rang i et la première photodiode du pixel de rang i-1 situé immédiatement en amont du pixel de rang i, le capteur comprenant encore :
- un circuit de conversion analogique-numérique (CONVᵢ) de rang i associé à chaque pixel de rang i, agencé pour convertir en numérique les charges recueillies dans au moins un des noeuds de stockage de ce pixel de rang i ;
- des moyens de commande des grilles de transfert et des circuits de conversion pour transférer les charges d'une photodiode vers l'un ou l'autre des noeuds de stockage qui l'encadrent puis les convertir, selon un cycle périodique de période Tp où Tp est le temps de défilement sur une distance égale à un pas des lignes de pixels, qui est un cycle de deux phases qui sont telles que, pour chaque pixel de rang i:
- à la fin d'une première phase les charges des deux photodiodes sont transférées dans le noeud central en vue d'une opération de conversion analogique-numérique ultérieure par le circuit de conversion analogique-numérique de rang i (CONVᵢ) du pixel de rang i ;
- à la fin d'une deuxième phase de durée Tp/2, les charges de la première photodiode du pixel de rang i ainsi que les charges de la deuxième photodiode du pixel aval de rang i+1 sont transférées dans le noeud aval, puis les charges présentes dans le noeud aval sont converties dans le circuit de conversion de rang i (CONVᵢ) associé au pixel de rang i ;
- des moyens pour accumuler dans le circuit de conversion de rang i les résultats de la ou les conversions effectuées au cours du cycle de deux phases courant avec le résultat précédemment accumulé dans le circuit de conversion de rang i-1 à la fin du cycle de deux phases précédent.

2. Capteur d'image selon la revendication 1, **caractérisé en ce que** le pixel a une forme généralement carrée.

3. Capteur d'image selon l'une des revendication 1 et 2, **caractérisé en ce que** des moyens de sélection sont prévus pour sélectionner indépendamment l'un de l'autre le noeud central ou le noeud aval afin de lire les charges qui y sont contenues, et **en ce que** à la fin de la première phase, après transfert des charges dans le noeud central, les charges de ce noeud sont converties dans le circuit de conversion de rang i associé au pixel de rang i.

4. Capteur d'image selon l'une des revendications 1 et 2, **caractérisé en ce que** le noeud central et le noeud aval sont électriquement reliés par un conducteur de manière à constituer un noeud électriquement commun, et **en ce que** les charges contenues dans le noeud électriquement commun sont converties dans le circuit de conversion de rang i seulement à la fin de la deuxième phase mais pas à la fin de la première phase.

5. Capteur d'image selon la revendication 4, **caractérisé en ce que** des moyens de réinitialisation du noeud commun sont prévus pour réinitialiser ce noeud au cours de la première phase avant transfert des charges dans le noeud central, mais pas au cours de la deuxième phase.

6. Capteur selon la revendication 1, **caractérisé en ce que** les circuits de conversion analogique-numérique comportent chacune un compteur dont le contenu est incrémenté proportionnellement à la valeur analogique du signal à convertir, et le contenu du compteur correspondant au pixel de rang i est initialisé, au début d'un cycle périodique de deux phases mais pas entre deux phases du même cycle, à une valeur qui est le résultat accumulé par le compteur du circuit de conversion de rang suivant i-1.

7. Capteur d'image à défilement et sommation de charges synchronisée avec le défilement relatif d'une scène à détecter devant le capteur, comprenant N lignes de pixels à photodiodes et grilles de transfert de charges, les N lignes de pixels étant réparties avec un pas D, chaque pixel, de forme généralement carrée, comportant P photodiodes, P entier supérieur à 2, disposées successivement dans le sens du défilement du capteur devant la scène, avec des noeuds de stockage de charge entre les photodiodes du pixel et entre les photodiodes de pixels adjacents d'une même colonne de pixels, avec des grilles de transfert entre les photodiodes et les noeuds de stockage, les noeuds de stockage pouvant être reliés à un conducteur de colonne et à autant de circuits de conversion analogique-numérique qu'il y a de pixels dans une colonne, chaque circuit de conversion étant apte à effectuer P-1 conversions analogique-numérique à chaque phase, correspondant aux charges de P-1 noeuds de stockage, les grilles de transfert étant commandées de manière à transférer les charges d'une photodiode soit vers un noeud de stockage situé en aval de la photodiode soit vers un noeud situé en amont, selon un cycle périodique de période correspondant à la durée de défilement sur une distance D, le cycle comportant P phases de durées égales, la commande des grilles étant telle qu'à chaque phase il y a un noeud de stockage qui ne reçoit pas de charges des photodiodes et le noeud qui ne reçoit pas de charges est permuté à chaque nouvelle phase selon une permutation circulaire, les charges reçues par les autres noeuds de stockage sont converties en numérique et sont additionnées entre elles sur les différentes phases d'une période et sur N périodes successives en synchronisme avec le défilement, le sens de la permutation circulaire étant tel que les résultats additionnés proviennent à chaque fois de deux photodiodes adjacentes qui ne sont pas les mêmes au cours des P phases mais qui sont celles qui ont vu la même portion d'image pendant le cycle de P phases.

## Patentansprüche

1. Bildsensor mit Durchlauf und mit Summierung von Ladungen, welche mit dem relativen Durchlauf einer vor dem Sensor zu beobachtenden Szene synchronisiert ist, beinhaltend N Zeilen von Pixeln mit Fotodioden und Ladungsübertragungs-Gitter, wobei die N Pixelzeilen mit einer Steigung D verteilt sind, wobei jeder Pixel des Ranges i in einer Spalte eine erste und eine zweite Photodiode (PPDaᵢ, PPDbᵢ) beinhaltet, welche nacheinander in der Durchlaufrichtung angeordnet sind, und drei Speicherknoten von Ladungen, welche von den Photodioden durch die Ladungsübertragungs-Gitter getrennt sind, wobei die Speicherknoten einen mittleren Knoten (NDCᵢ) beinhalten, welcher zwischen den beiden Photodioden und den zwei anderen Knoten befindlich ist, welche mit den angrenzenden Pixeln geteilt werden, bestehend aus einem nachgelagerten Knoten (NDEᵢ), welcher zwischen der ersten Photodiode des Pixels des Ranges i und der zweiten Photodiode des Pixels des Ranges i+1 befindlich ist, welcher unmittelbar dem Pixel von Rang i nachgelagert ist, und aus einem vorgelagerten Knoten (NDEᵢ₋₁), welcher zwischen der zweiten Photodiode des Pixels des Ranges i und der ersten Photodiode des Pixels des Ranges i-1 befindlich ist, welcher unmittelbar dem Pixel von Rang i vorgelagert ist, wobei der Sensor zudem Folgendes beinhaltet:
- einen Analog-Digital-Umwandlungsschaltkreis (CONVᵢ) des Ranges i, welcher mit jedem Pixel des Ranges i verbunden ist, welcher angeordnet ist, um die in mindestens einem der Speicherknoten dieses Pixels des Ranges i gesammelten Ladungen in ein digitales Format umzuwandeln;
- Mittel zum Steuern der Übertragungsgitter und der Umwandlungsschaltkreise zum Übertragen der Ladungen von einer Photodiode an den einen oder den anderen der Speicherknoten, die diese einrahmen, und anschließend, diese entsprechend einem periodischen Zyklus mit einer Periode Tp umzuwandeln, wobei Tp die Durchlaufzeit über eine Distanz ist, welche einer Steigung der Pixelzeilen entspricht, welcher ein Zyklus von zwei Phasen ist, welche für jeden Pixel des Ranges i in der Weise geartet sind, dass:
- am Ende einer ersten Phase, die Ladungen der beiden Photodioden in den mittleren Knoten zwecks einem späteren Analog-Digital-Umwandlungsschritt durch den Analog-Digital-Umwandlungsschaltkreis des Ranges i (CONVᵢ) des Pixels übertragen werden;
- am Ende einer zweiten Phase der Dauer Tp/2 die Ladungen der ersten Photodiode des Pixels des Ranges i sowie die Ladungen der zweiten Photodiode des nachgelagerten Pixels des Ranges i+1 in den nachgelagerten Knoten übertragen werden, wonach die in dem nachgelagerten Knoten vorhandenen Ladungen in dem Umwandlungsschaltkreis des Ranges i (CONV;), welcher mit dem Pixel des Ranges i verbunden ist, umgewandelt werden;
- Mittel zum Kumulieren im Umwandlungsschaltkreis des Ranges i der Resultate der im Zuge des laufenden Zyklus mit zwei Phasen durchgeführten Umwandlung bzw. Umwandlungen mit dem zuvor im Umwandlungsschaltkreis des Ranges i-1 bei Ende des vorherigen Zyklus mit zwei Phasen kumulierten Resultat.

2. Bildsensor nach Anspruch 1, **dadurch gekennzeichnet, dass** der Pixel eine im Allgemeinen quadratische Form besitzt.

3. Bildsensor nach einem der Ansprüche 1 und 2, **dadurch gekennzeichnet, dass** Auswahlmittel vorgesehen sind, um unabhängig voneinander den mittleren Knoten oder den nachgelagerten Knoten auszuwählen, um die Ladungen zu lesen, die darin enthalten sind, und dadurch, dass am Ende der ersten Phase, nach der Übertragung der Ladungen in den mittleren Knoten, die Ladungen dieses Knotens in dem Umwandlungsschaltkreis des Ranges i, welcher mit dem Pixel des Ranges i verbunden ist, umgewandelt werden.

4. Bildsensor nach einem der Ansprüche 1 und 2, **dadurch gekennzeichnet, dass** der mittlere Knoten und der nachgelagerte Knoten elektrisch durch einen Leiter in der Weise verbunden sind, dass sie einen elektrisch gemeinsamen Knoten bilden und dadurch, dass die in dem elektrisch gemeinsamen Knoten enthaltenen Ladungen in dem Umwandlungsschaltkreis des Ranges i erst am Ende der zweiten Phase, jedoch nicht am Ende der ersten Phase, umgewandelt werden.

5. Bildsensor nach Anspruch 4, **dadurch gekennzeichnet, dass** Reinitialisierungsmittel des gemeinsamen Knotens vorgesehen sind, um diesen Knoten im Zuge der ersten Phase vor der Übertragung der Ladungen in den mittleren Knoten, jedoch nicht im Zuge der zweiten Phase, zu reinitialisieren.

6. Sensor nach Anspruch 1, **dadurch gekennzeichnet, dass** die Analog-Digital-Umwandlungsschaltkreise jeweils einen Zähler beinhalten, dessen Inhalt proportional zum Analogwert des umzuwandelnden Signals inkrementiert wird, und der Inhalt des dem Pixel des Ranges i entsprechenden Zählers zu Beginn eines periodischen Zyklus von zwei Phasen initialisiert wird, jedoch nicht zwischen zwei Phasen desselben Zyklus, auf einen Wert, der dem durch den Zähler des Umwandlungsschaltkreises des folgenden Ranges i-1 kumulierten Resultat entspricht.

7. Bildsensor mit Durchlauf und mit Summierung von Ladungen, welche mit dem relativen Durchlauf einer vor dem Sensor zu erkennenden Szene synchronisiert ist, beinhaltend N Pixelzeilen mit Photodioden und Ladungsübertragungsgittern, wobei die N Pixelzeilen mit einer Steigung D verteilt sind, wobei jeder Pixel, der eine allgemein quadratische Form besitzt, P Photodioden beinhaltet, wobei P eine Ganzzahl über 2 ist, welche nacheinander in der Durchlaufrichtung des Sensors vor der Szene angeordnet sind, wobei Speicherknoten von Ladungen zwischen den Photodioden des Pixels und zwischen den Photodioden angrenzender Pixel einer gleichen Pixelspalte angeordnet sind, wobei Übertragungsgitter zwischen den Photodioden und den Speicherknoten angeordnet sind, wobei die Speicherknoten mit einem Spaltenleiter und mit ebenso vielen Analog-Digital-Umwandlern verbunden sein können, wie es Pixel in einer Spalte gibt, wobei jeder Umwandlungsschaltkreis in der Lage ist, P-1 Analog-Digital-Umwandlungen bei jeder Phase durchzuführen, welche den Ladungen von P-1 Speicherknoten entsprechen, wobei die Übertragungsgitter so gesteuert werden, dass sie die Ladungen einer Photodiode entweder an einen der Photodiode nachgelagerten Speicherknoten oder an einen vorgelagerten Speicherknoten übertragen, entsprechend einem periodischen Zyklus mit einer Periode, welche der Durchlaufdauer über eine Distanz D entspricht, wobei der Zyklus P Phasen gleicher Dauer beinhaltet, wobei die Steuerung der Gitter so erfolgt, dass es bei jeder Phase einen Speicherknoten gibt, der keine Ladungen von den Photodioden erhält und der Knoten, der keine Ladungen erhält, bei jeder neuen Phase entsprechend einer Kreispermutation permutiert wird, wobei die von den anderen Speicherknoten empfangenen Ladungen in ein digitales Format umgewandelt werden und untereinander über die unterschiedlichen Phasen einer Periode und über N aufeinanderfolgende Perioden synchronisiert mit dem Durchlauf addiert werden, wobei die Richtung der Kreispermutation so gestaltet ist, dass die addierten Ergebnisse jedes Mal von zwei aneinandergrenzenden Photodioden stammen, welche nicht dieselben im Zuge der P Phasen sind, sondern diejenigen sind, die denselben Abschnitt des Bildes im Zyklus von P Phasen gesehen haben.

## Claims

1. A time-delay and charge summation image sensor, the charge summation of which is synchronized with the relative movement of a scene to be observed in front of the sensor, which comprises N rows of photodiode pixels and charge transfer gates, the N rows of pixels being distributed with a pitch D, each pixel of rank i in a column comprising first and second photodiodes (PPDaᵢ, PPDbⱼ) arranged in succession in the direction of the movement, and three charge storage nodes separated from the photodiodes by charge transfer gates, these storage nodes comprising a central node (NDCᵢ) located between the two photodiodes, and two other nodes shared with the adjacent pixels, which nodes are a downstream node (NDEᵢ) located between the first photodiode of the pixel of rank i and the second photodiode of the pixel of rank i+1 located immediately downstream of the pixel of rank i, and an upstream node (NDEᵢ₋₁) located between the second photodiode of the pixel of rank i and the first photodiode of the pixel of rank i-1 located immediately upstream of the pixel of rank i, the sensor furthermore comprising:
- an analog/digital conversion circuit (CONVᵢ) of rank i associated with each pixel of rank i; arranged to convert into a digital format the charges received in at least one of the storage nodes of this pixel of rank i ;
- means for controlling the transfer gates and the conversion circuits in order to transfer the charges from a photodiode to one or other of the storage nodes that flank it then to convert these charges, in a periodic cycle of period Tp where Tp is the time it takes the image to move a distance equal to the pitch of the rows of pixels, which is a two-phased cycle, the two phases being such that for each pixel of rank i:
- at the end of a first phase the charges of the two photodiodes are transferred to the central node for the purpose of a later analog/digital conversion operation by the analog/digital conversion circuit of rank I (CONV_{I}) of the pixel of rank i;
- at the end of a second phase of duration Tp/2, the charges of the first photodiode of the pixel of rank i and the charges of the second photodiode of the downstream pixel of rank i+1 are transferred to the downstream node, then the charges present in the downstream node are converted in the conversion circuit of rank i (CONVᵢ) associated with the pixel of rank i; and
- means for accumulating, in the conversion circuit of rank i, the results of the one or more conversions carried out during the current two-phase cycle with the result accumulated beforehand in the conversion circuit of rank i-1 at the end of the preceding two-phase cycle.

2. The image sensor as claimed in claim 1, **characterized in that** the pixel has a generally square shape.

3. The image sensor as claimed in either of claims 1 and 2, **characterized in that** selecting means are provided for selecting independently of each other the central node or the downstream node in order to read the charges that are contained thereon, and **in that** at the end of the first phase, after the charges have been transferred to the central node, the charges on this node are converted in the conversion circuit of rank i associated with the pixel of rank i.

4. The image sensor as claimed in either of claims 1 and 2, **characterized in that** the central node and the downstream node are electrically connected by a conductor so as to form an electrically common node, and **in that** the charges contained on the electrically common node are converted in the conversion circuit of rank i only at the end of the second phase but not at the end of the first phase.

5. The image sensor as claimed in claim 4, **characterized in that** means for resetting the common node are provided in order to reset this node during the first phase before charges are transferred to the central node, but not during the second phase.

6. The sensor as claimed in claim 1, **characterized in that** the analog/digital conversion circuits each comprise a counter the contents of which are incremented proportionally to the analog value of the signal to be converted, and the contents of the counter corresponding to the pixel of rank i is set, at the start of a periodic two-phase cycle, but not between two phases of the same cycle, to a value that is the result accumulated by the counter of the conversion circuit of the following rank i-1.

7. A time-delay and charge summation image sensor the charge summation of which is synchronized with a relative movement of a scene to be detected in front of the sensor, which sensor comprises N rows of photodiode pixels and charge transfer gates, the N rows of pixels being distributed with a pitch D, each pixel, of generally square shape, comprising P photodiodes, P being an integer higher than 2, photodiodes that are arranged in succession in the direction of the movement of the sensor in front of the scene, having charge storage nodes between the photodiodes of the pixel and between the photodiodes of adjacent pixels in a same column of pixels, and having transfer gates between the photodiodes and the storage nodes, the storage nodes possibly being connected to a column conductor and to as many analog/digital conversion circuits as there are pixels in a column, each conversion circuit being able to carry out P-1 simultaneous analog/digital conversions in each phase, these conversions corresponding to the charge on P-1 storage nodes, the transfer gates being controlled so as to transfer the charges from one photodiode either to a storage node located downstream of the photodiode or to a node located upstream in a periodic cycle of period corresponding to the time taken to move a distance D, the cycle comprising P phases of equal duration, the control of the gates being such that in each phase there is a storage node that does not receive charges from the photodiodes and the node that does not receive charges is circularly permutated in each new phase, the charges received by the other storage nodes being digitized and added together over the various phases of a period and over N successive periods in sync with the movement, the direction of the circular permutation being such that that the added results originate each time from two adjacent photodiodes that are not the same during the P phases but that are those that have seen the same image portion during the cycle of P phases.
